# EUROPÄISCHE PATENTANMELDUNG

(11) **EP 2 716 932 A2**
(43) Veröffentlichungstag der Anmeldung: **09.04.2014**
(21) Anmeldenummer: 13184069.6
(22) Anmeldetag: 12.09.2013
(51) Int. Cl.: F16F 1/12

(54) **Zugfeder**

(30) Priorität: 05.10.2012 DE 102012109477
(71) Anmelder: Doco International B.V., 6136 KV Sittard (NL)
(72) Erfinder: Stadhouders, John C. J., 6467 AZ Kerkrade (NL); Blom, Robert P. D., 6321 AL Wijlre (NL)
(74) Vertreter: Borchert, Uwe Rudolf

(57) **Zusammenfassung**

Die Erfindung betrifft eine Zugfeder (1, 15) mit einem spiral-oder schraubenförmig gewickelten Körper aus einem Federwerkstoff, der an seinen geraden Federenden (3) mit auswechselbaren gesicherten Adaptern (2, 17, 20) zur Verbindung mit einem Bauteil oder dergleichen ausgestattet ist.

## Beschreibung

Die Erfindung betrifft eine Zugfeder mit einem spiral- oder schraubenförmig gewickelten Körper aus einem Federwerkstoff gemäß der im Oberbegriff des Anspruchs 1 angegebenen Art.

Eine derartige Zugfeder ist aus der DE 19 71 840 U1 zu entnehmen. Die dort wiedergegebene Zugfeder zeichnet sich durch die Ausbildung von endseitigen Ösen aus.

Zugfedern aus Federstahl werden für verschiedenste Anwendungsbereiche eingesetzt. Dafür weisen derartige Zugfedern an ihren Enden Ösen auf, die einen im Wesentlichen rechtwinkelig abgebogenen Bereich aufweisen. Dieser Bereich der Zugfedern, der unterschiedlichen Spannungswerten auch Wech-selbelastungen ausgesetzt ist, so dass die unterschiedlichen Kräfte gerade in diesen Bereichen eine sehr hohe Belastung für den Federstahl darstellen. Die in diesen Übergangsbereichen entstehenden Materialermüdungen, aufgrund der Dauer- und Überbelastung, sind als kritisch anzusehen, was letzt-endlich zum Bruch der Feder gerade in diesen Bereichen der Ösen führen kann.

Der Erfindung liegt die Aufgabe zugrunde, eine Zugfeder aus schraubenförmig gewickeltem Federwerkstoff gemäß der im Oberbegriff angegebenen Art derart zu verbessern, dass auch bei hohen Dauerbe-lastungen Federbrüche, insbesondere in den Endbereichen, weitgehend vermieden werden. Darüber hinaus soll eine derartige Ausbildung der Zugfeder auch für unterschiedlichste Anwendungsbereiche möglich sein, wobei stets auf den gleichen Grundkörper der Zugfeder zurückgegriffen werden soll.

Gelöst wird die Aufgabe der Erfindung durch die kennzeichnenden Merkmale des Anspruches 1 in Verbindung mit den Oberbegriffsmerkmalen. Die Unteransprüche geben dabei eine weitere Ausgestaltung des erfindungsgemäßen Gedankens wieder.

Durch die Ausbildung von Ösen oder Augen an Schraubenfederenden wird im Wesentlichen eine axiale Belastung bei Aufbringung von Kräften auf die Federelementenden ausgeübt. Dieses vermeidet die Lösung der Erfindung, nämlich dadurch, dass die Federenden glatt und gerade sind. Keinerlei, insbesondere durch Wärmeeinwirkung, vorhandene geometrische Enden den Windungen werden vorgenommen. Durch eine solche Maßnahme wird von vornherein ausgeschlossen, dass innerhalb des Federwerkstoffes es zu einer Überbelastung und damit zu einem Bruch des Federelementes vorzeitig kommt.

Erfindungsgemäß wird deshalb die Zugfeder an zumindest einem der Federenden mit einem auswechselbaren Adapter versehen, der gegenüber einer Lageveränderung durch mindestens eine Sicherung gesichert wird. Mit einem derartigen Adapter ist es möglich, die Zugfeder mit anderen Bauteilen, mit Vorrichtungen, mit Maschinenelement oder dergleichen so zu verbinden, dass der Einsatz der Feder über den gewünschten Einsatzzeitraum konstant bleibt und Federbrüche in den Endbereichen vermieden werden.

Während der Einsatz von konventionellen Zugfedern stets eine konstruktive Ausbildung zu den Verbindungselementen bei Federaugen erfordert, wird durch die Verwendung von unterschiedlich ausgebildeten Adaptern im Sinne der Erfindung eine einfache und unterschiedliche Einsatzmöglichkeit in einem weiten Spektrum geschaffen.

Ein derartiger Adapter kann in einer ersten bevorzugten Ausführungsform im Wesentlichen aus einem flachen gestreckten Körper bestehen, der mindestens einen Führungsschacht aufweist, der in das glatte, gerade Federende und somit in den Innenraum des Federelementes eindringt und sich mit mindestens einer Abstützkante an dem Federende abstützt. Außerhalb des Federelementes ist dabei ein Adaptionsbereich vorhanden, der unterschiedlich gestaltet werden kann und so genauer auf die Verwendung anpassbar ist. In einer ersten bevorzugten Ausführungsform kann dieser Adapterbereich ein Durchbruch sein; es sind auch Gewindebohrungen oder mehrere Durchbrüche möglich, um so das Federelement beispielsweise bei Garagentoren oder dgl. als Zugfeder einzusetzen.

Neben einer einseitig, endseitig ausgeführten Adaption ist es möglich, auch an beiden Federenden gleichzeitig einen Adapter gleicher oder unterschiedlichster Ausführung einzusetzen. Das gleiche trifft auch zu für den Fall, dass eine höhere Federkraft benötigt wird und zwei Zugfedern übereinander angeordnet sind. Dieses ist mit einem gemeinsamen Adapterteil gleichzeitig ausführbar.

Befestigt wird der flache gestreckte Körper des Adapters dadurch, dass zwischen zwei benachbarten Windungen der Zugfeder ein Verbindungsstück eingefügt wird. Dieses Verbindungsstück ist so ausgebildet, dass es an seiner Einführungsseite eine Anschrägung aufweisen kann, um so einfacher zwischen die übereinander liegenden Windungen gedrückt werden zu können. Nachdem der erste Widerstand der benachbarten Windungen überwunden ist, wird das Verbindungsstück weiter zwischen die Windungen geschoben und gleichzeitig mit dem Adapter verbunden. Diese Verbindung kann beispielsweise dadurch geschehen, dass innerhalb des Adapters eine Verbindungsaufnahme vorhanden ist, in welche ein Einschnitt des Verbindungsstückes eingreift. Dieses trifft sowohl für die Ausführung einer einzelnen Zugfeder als auch zweier übereinander angeordneter Zugfedern zu, wobei dann innerhalb des Adapters zwei Verbindungsstücke eingeführt werden, die in unterschiedlichen Höhen angeordnet sind. Nachdem nun die Verbindungsstücke oder das Verbindungsstück richtig platziert worden ist, wird zur Absicherung gegen unbeabsichtigtes Entfernen über den Adapter und auch über das Ende der Zugfeder gleichermaßen ein Abschlussstück gesetzt. Dieses Abschlussstück kann einen runden Querschnitt aufweisen und überkront quasi den Bereich, in dem das Verbindungsstück innenseitig eingebettet liegt, so dass ein unbeabsichtigtes Entfernen beispielsweise unter Belastung der Zugfeder nicht möglich ist. Derartige Abschlussstücke können vorzugsweise aus Metall oder Kunststoff gefertigt werden.

In einer weiteren bevorzugten Ausführungsform kann der Adapter auch als rundes Bauteil ausgeführt werden, welches ebenfalls in der Lage ist, zwei übereinander angeordnete Zugfedern sicher miteinander zu verbinden und auch zu belasten. Dabei wird in analoger Weise zur Sicherung des Adapters auf Verbindungsstücke zurückgegriffen, die einerseits in den Adapter eingeschoben werden.

In einer weiteren bevorzugten Ausführungsform kann auf einen Adapter zurückgegriffen werden, bei dem das Verbindungsstück Bestandteil des Adapters ist. Dabei wird der Adapter auch in das Zugfederende eingesteckt. Innerhalb des Adapters ist jedoch exzentrisch gelagert ein verdrehbares Verbindungsstück integriert, das vorzugsweise aus dem Federelement herausragt. Dieses Verbindungsstück wird nach Einsetzten des Adapters durch Drehung zwischen zwei benachbarter Windungen der Zugfeder gebracht und somit entsteht eine kraft- und formschlüssige Verbindung auch über einen einteiligen Adapter mit einem Zugfederende.

Es versteht sich, dass unterschiedliche Adapterausführungen auch an einem Federelement verwendet werden können.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Explosionszeichnung in einer ersten Ausführungsform eines Adapters mit einer Zugfeder;
- Fig. 2: wie Figur 1, jedoch mit eingesetzten Adaptern an beiden Federenden;
- Fig. 3: wie Figur 2, jedoch mit eingesetzten Verbindungsstücken;
- Fig. 4: die gesicherte Ausführung mit den Adaptern gemäß den Figuren 1 bis 3;
- Fig. 5: eine Schnittdarstellung durch zwei übereinander angeordnete Zugfedern mit eingesetzten endseitigen Adaptern;
- Fig. 6: wie Figur 5, jedoch in einer Drehung der Zugfeder von 90°;
- Fig. 7: eine weitere bevorzugte Ausführungsform eines Adapters in einer eingesetzten Form innerhalb von zwei übereinander angeordneten Zugfedern;
- Fig. 8: wie Figur 7, jedoch in einer Verdrehung um 90°, und
- Fig. 9: eine weitere bevorzugte Ausführungsform einer Adaptierung mit einem einteiligen Adapter.

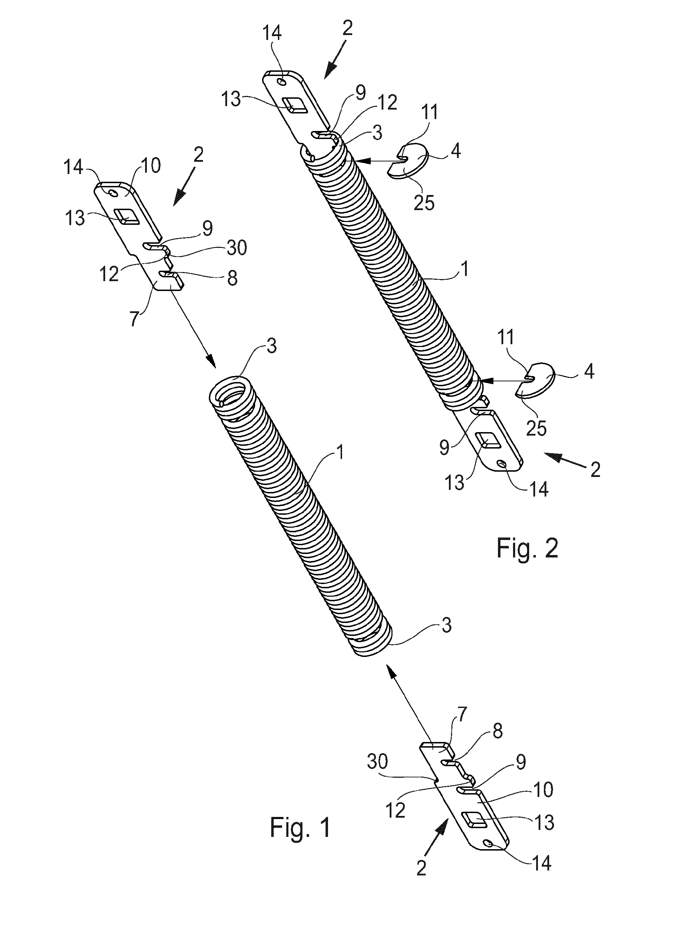

In der Explosionsdarstellung gemäß Figur 1 wird eine Zugfeder 1 mit flachen Federenden 3 dargestellt. Endseitig in die Federenden 3 wird jeweils ein Adapter 2 der Gestalt eingeführt, dass dieser Adapter 2 im Wesentlichen als flaches Bauteil, vorzugsweise aus einem Bandstahl oder dergleichen, ausgeführt ist. Der Adapter 2 besteht dabei aus einem Führungsschaft 7, der, wie in der Figur 2 dargestellt ist, innerhalb des Innenraumes der Zugfeder 1 eindringt. Der Führungsschaft 7 ist in seiner Breite auf das Innenmaß der Zugfeder 1 abgestimmt. Abstützen kann sich der Adapter 2 an einem Stützbereich 30 gegen das Federende 3. Innerhalb des Führungsschaftes 7 ist eine Verbindungsaufnahme 8 enthalten, in welche gemäß der Figur 2, durch seitliche Einfügung zwischen zwei benachbarter Windungen der Zugfeder 1, ein Verbindungsstück 4 mit einem Einschnitt 11 eingeschoben wird. Zur besseren Einfügung zwischen den Windungen der Zugfeder 1 weist das Verbindungsstück 4 an seinen Vorderkanten Verjüngungen 25 auf.

Wenn das Verbindungsstück 4 mit dem Adapter 2 verbunden ist, kann der Adapter 2 nicht aus dem Innenbereich der Zugfeder 1 entfernt werden. Dadurch wird deutlich, dass der Adapter 2 mit seinem Außenbereich, der als Adaptionsbereich 10 unterschiedlich ausgeführt werden kann, zur Verbindung mit anderen Bauteilen, Bauelementen oder dgl. zur Verfügung steht. In den Ausführungsbeispielen gemäß der Figuren 1 bis 4 weist der Adapter 2 einen Verbindungsdurchbruch 13 und eine Gewindebohrung 14 auf. Diese Ausgestaltung kann jedoch auch je nach, Anwendungsfall, modifiziert werden.

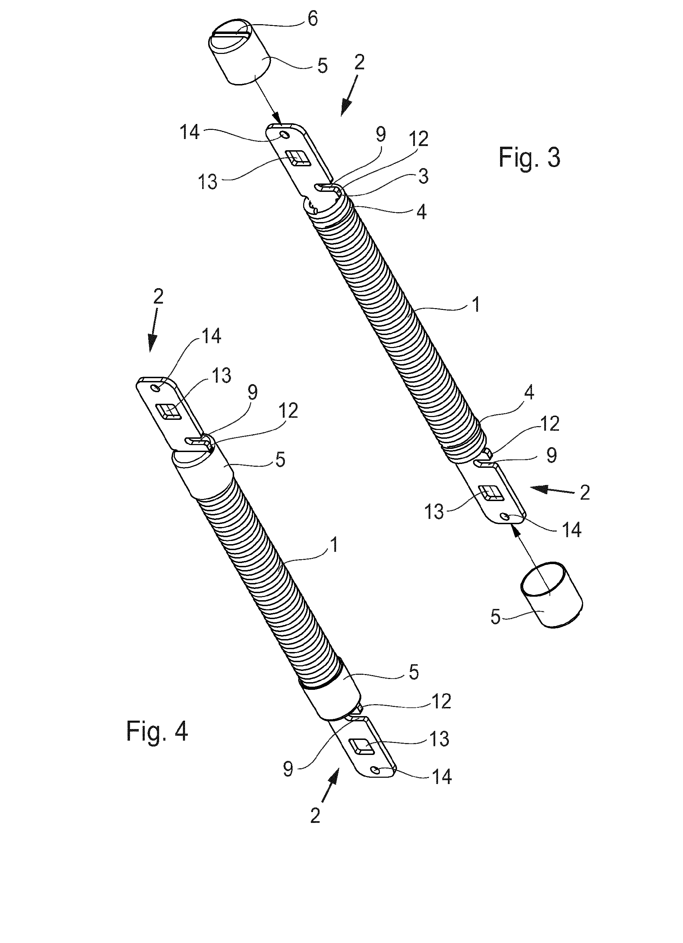

Zur Sicherung des Adapters 2 ist gemäß Figur 3 ein Abschlussstück 5 vorgesehen, welches sich über das Federende 3, und damit über den Teil des Adapters 2, der innerhalb der Zugfeder 1 liegt, und dem Verbindungsstück 4 als Sicherung legt. Innerhalb eines Bodens des Abschlussstückes 5 ist ein Durchlass für den äußeren Adaptionsbereich 10.

Eine funktionsfähige Zugfeder 1 gibt die Figur 4 wieder, bei der Abschlussstücke 5 über die endseitigen Ausführungen der Zugfeder 1 mit jeweils einem Adapter 2 ausgeführt ist.

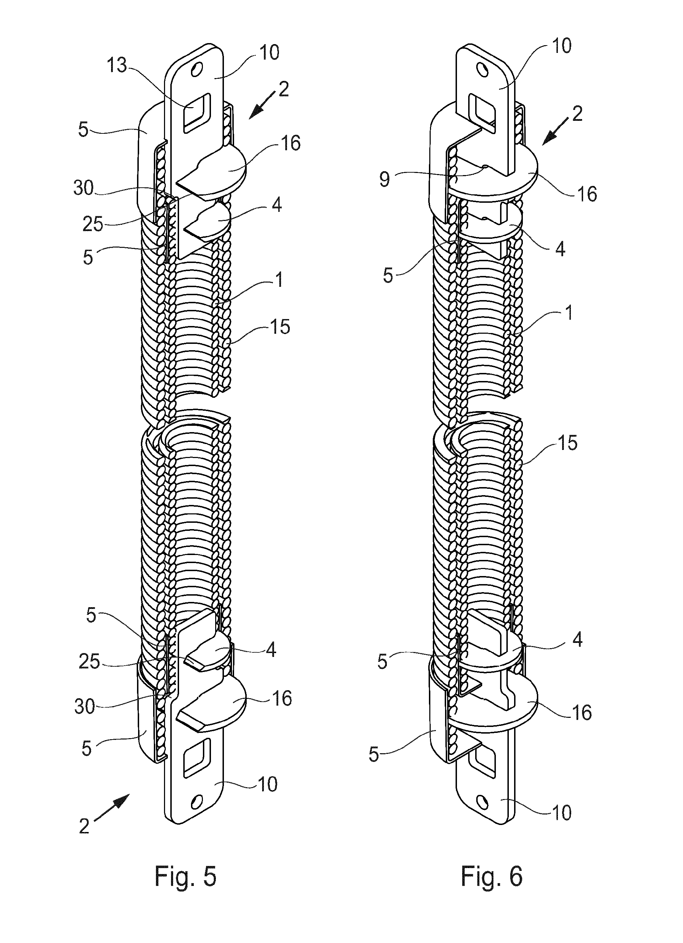

Wie die Figuren 1 bis 4 ferner zeigen, ist es möglich, mit dem gleichen Adapter 2 auch auf Grund seiner Ausgestaltung, nämlich dass neben dem Führungsschaft 7 gleichzeitig ein weiterer Führungsschaft 12 mit einem größeren Maß vorhanden ist, so dass zwei ineinander angeordnete Zugfedern miteinander endseitig über einen Adapter 2 verbunden werden. Dieses wird durch die Figuren 5 und 6 deutlicher. In einem ersten Schnitt ist in analoger Weise der Montagevorgang des Adapters 2, wie in den Figuren 1 bis 4 ausgeführt worden, wobei anschließend über die Zugfeder 1 eine weitere Zugfeder 15 geschoben wird. Ein Verbindungsstück 16 wird dabei zusätzlich mit dem Adapter 2 und der Zugfeder 15 verbunden. Das Verbindungsstück 16 ist in gleicher Weise wie das Verbindungsstück 4 ausgebildet, nur ist es auf den größeren Durchmesser der Zugfeder 15 abgestimmt. Das Verbindungsstück 16 wird somit auch zwischen zwei benachbarter Windungen der Zugfeder 15 eingeschoben und geht gleichzeitig eine Verbindung mit dem Adapter 2 in gleicher Art und Weise wie das Verbindungsstück 4 ein.

Durch die Figuren 5 und 6 wird deutlich, dass zwischen den Zugfedern 1 und 15 gleichzeitig über die Adapter 2 endseitig eine Verbindung zwischen den beiden Zugfedern 1, 15 hergestellt wird und die Möglichkeit über die Adaptionsbereiche 10 der Anschluss an Vorrichtungen oder dgl. möglich ist. Wie bei der Zugfeder 1 ist auch das Federende 3 der Zugfeder 15 mit einem Abschlussstück 5 überkront. Dieses bietet neben einer Sicherung des Verbindungsstückes 16 gleichzeitig einen sauberen Abschluss des Federpaketes an den Zugfedern 1 und 15.

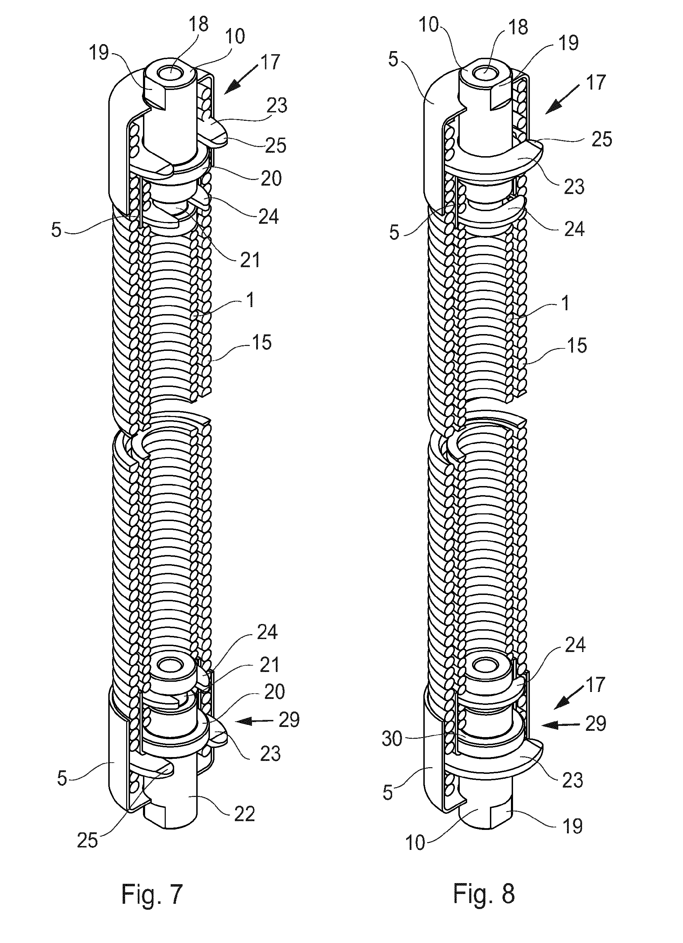

Die Figuren 7 und 8 zeigen eine weitere mögliche Ausgestaltung der Verbindung der Zugfeder 1 und 15, die hier übereinander dargestellt worden sind mit einem Adapter 17. Es sei darauf hingewiesen, dass der Adapter 17 auch nur bei einer Zugfeder 1 oder 15 Verwendung finden kann.

Der Adapter 17 ist in diesem Ausführungsbeispiel als kreisrundes Drehteil ausgeführt. Die Verbindung zwischen der Feder 1 und dem Adapter 17 wird über ein Verbindungsstück 24, welches einen etwas modifizierten Aufbau gegenüber dem vorher beschriebenen Verbindungsbereich hat, der darin liegt, dass der Einschnitt 11, wie bei den Verbindungsstücken 4, 16 größer ausgebildet ist. Nach der Einsetzung zwischen benachbarter Windungen der Zugfeder 1 wird das Verbindungsstück 24 in den Einschnitt 21 des Adapters 17 gedrückt. Das Verbindungsstück 24 stützt sich dabei innerhalb des Einschnittes 21 des Adapters 17 ab. Das Federende 3 der Zugfeder 1 stützt sich dabei gegen einen Kragen 20 des Adapters 17 ab. Dieser Kragen 20 ist maßlich auf den Federdurchmesser der Zugfeder 1 abgestimmt.

Bei der Ausführung mit zwei Zugfedern 1, 15 wird in analoger Ausführung mit dem gleichen Adapter 17, unter Verwendung eines weiteren Verbindungsstückes 23, eine Verbindung der Zugfeder 15 mit dem Adapter 17 und gleichzeitig auch mit der Zugfeder 1 hergestellt. Auch das Verbindungsstück 23 wird, wie bereits beschrieben, innerhalb zweier benachbarter Windungen eingesetzt und stützt sich an dem Kragen 20 ab. Auch bei diesem Ausführungsbeispiel der Figuren 7 und 8 wird jeweils zur Sicherung des Adapters 2 auf Abschlussstücke 5 zurückgegriffen. Das Abschlussstück 5 hat in diesem Falle jedoch einen kreisrunden Durchbruch in seinem Boden, so dass der Schaft 22 des Adapters 17 hier durchtreten kann. Innerhalb des austretenden Schaftes 22 des Adapters 17 ist der Adaptionsbereich 10 vorhanden. In dem Adaptionsbereich 10 ist eine Befestigungsbohrung 18, die mit einem Gewinde versehen sein kann und somit die Möglichkeit zur Verbindung mit externen Bauelementen oder Bauwerken ermöglicht. Um ein Verdrehen des Adapters 17 hier bei der Montage mit anderen Bauteilen zu vermeiden, sind seitliche Schlüsselflächen 19 in dem Adaptionsbereich 10 angeordnet.

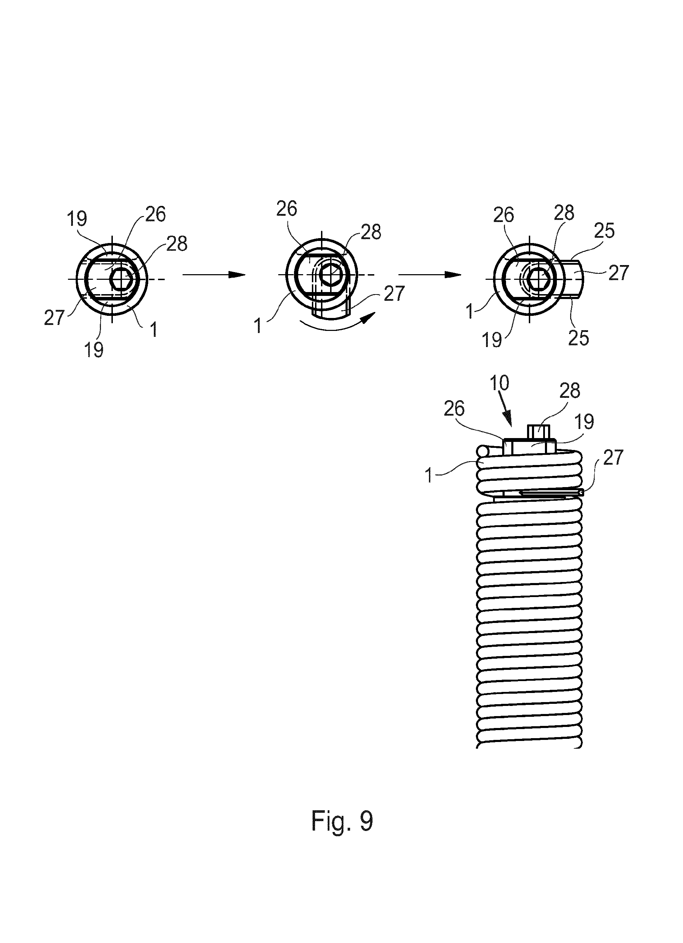

In der Figur 9 ist ein Ausführungsbeispiel dargestellt worden, welches als einstückiger Adapter 26 ausgebildet ist. Dieser einstückige Adapter 26 wird auch in das Ende der Zugfeder 1 eingeführt und ist auf den Innendurchmesser der Zugfeder 1 maßlich abgestimmt worden. Exzentrisch zu der Mitte des Adapters 26, der auch Schlüsselflächen 19 aufweist, ist ein Arretierungsbolzen 28 drehbar gelagert. Dieser Arretierungsbolzen 28 weist ebenfalls die Möglichkeit einer Werkzeugbefestigung auf und kann durch Drehen ein Verbindungsstück 27 in den Bereich zwischen zwei benachbarter Windungen bringen. Durch quasi eine Verdrehung um 180° gegenüber der Ausgangsstellung wird somit das Verbindungsstück 27 zwischen den Windungen der Zugfeder 1 festgesetzt. In oder an dem Adapter 26 ist auch eine Befestigung für externe Bauteile oder dergleichen, die nicht explizit ausgeführt dargestellt worden ist, enthalten.

Wie die nicht abschließend aufgeführten Ausführungsbeispiele deutlich machen, ist mit der Einfügung von Adaptern 2, 17, 26 die Möglichkeit gegeben, auf unterschiedlichste Art und Weise eine Befestigung von Zugfedern 1, 15 mit externen Bauteilen oder Bauwerken oder Maschinenelementen oder dgl. vorzunehmen und gleichzeitig die Lebensdauer der verwendeten Zugfedern 1, 15 zu erhöhen, weil die bekannten Ösen fehlen und es dadurch zu einer Überbelastung in den Übergangsbereichen nicht kommen kann. Wie die Ausführungsbeispiele zeigen, ist es auch möglich, bei übereinander angeordneter Zugfedern 1, 15 diese Adaption auszuführen.

Ferner bietet die Erfindung die Möglichkeit, die Federenden 3 mit unterschiedlichen Adaptern zu versehen, was je nach Anwendungsfall von großer Bedeutung sein kann, weil stets die gleichen Federelemente 1, 15 eingesetzt werden können.

Es zeigt sich, dass durch die vorliegende Erfindung die Lebensdauer von Zugfedern 1, 15 wesentlich erhöht werden kann, weil auf angeformte Ösen zur Verbindung mit weiteren Bauelementen verzichtet wird.

Der für die Zugfedern 1, 15 verwendete Federstahl kann unterschiedliche Querschnitte wie insbesondere rund, oval, rechteckig, quadratisch oder dergleichen aufweisen. Ebenso ist es möglich auch Zugfedern 1, 15 aus verschiedenen Materialien, wie z.B. Kunststoff herzustellen.

### Bezugszeichenliste

- 1: Zugfeder
- 2: Adapter
- 3: Federende
- 4: Verbindungsstück
- 5: Abschlussstück
- 6: Durchlass
- .7: Führungsschaft
- 8: Verbindungsaufnahme
- 9: Verbindungsaufnahme
- 10: Adaptionsbereich
- 11: Einschnitt
- 12: Führungsschaft
- 13: Verbindungsdurchbruch
- 14: Gewindebohrung
- 15: Zugfeder
- 16: Verbindungsstück
- 17: Adapter
- 18: Befestigungsbohrung
- 19: Schlüsselfläche
- 20: Kragen
- 21: Einschnitt
- 22: Schaft
- 23: Verbindungsstück
- 24: Verbindungsstück
- 25: Verjüngung
- 26: Adapter
- 27: Verbindungsstück
- 28: Arretierungsbolzen
- 29: Führungsbereich
- 30: Stützbereich

## Patentansprüche

1. Zugfeder (1, 15) mit einem spiral- oder schraubenförmig gewickelten Körper aus einem Federwerkstoff, der an seinen Federenden (3) offen und gerade ausgebildet ist, **dadurch gekennzeichnet, dass** die Zugfeder (1, 15) an zumindest einem seiner Federenden (3) einen auswechselbaren, gesicherten Adapter (2, 17, 26) zur Verbindung mit einem Bauteil, einer Vorrichtung, einem Maschinenelement oder dergleichen aufweist.

2. Zugfeder nach Anspruch 1, **dadurch gekennzeichnet, dass** der Adapter (2) im Wesentlichen einen gestreckten flachen Körper aufweist, der mindestens einen Führungsschaft (7, 12) und einen Stützbereich (30) aufweist, wobei der Führungsschaft (7, 12) über das Federende (3) in den Innenraum der Zugfeder (1, 15) eindringt und sich über den Stützbereich (30) gegenüber dem Federende (3) abstützt und einen Adaptionsbereich (10) beinhaltet, der im Wesentlichen außerhalb des Federendes (3) liegt.

3. Zugfeder nach Anspruch 2, **dadurch gekennzeichnet, dass** der Führungsschaft (7, 12) mindestens eine Verbindungsaufnahme (8, 9) aufweist.

4. Zugfeder nach Anspruch 2 oder 3, **dadurch gekennzeichnet, dass** der Adapter (2) innerhalb der Zugfeder (1, 15) über zwei benachbarte Windungen, unter Einfügung eines Verbindungsstückes (4, 16) mit der Zugfeder (1, 15) verbunden wird.

5. Zugfeder nach einem der vorhergehenden Ansprüche, **dadurch gekennzeichnet, dass** das Verbindungsstück (4, 16) in die Verbindungsaufnahmen (8, 9) des Adapters (2) eingreift und durch ein Abschlussstück (5) gesichert wird.

6. Zugfeder nach einem der vorhergehenden Ansprüche, **dadurch gekennzeichnet, dass** das Verbindungsstück (4, 16) im Wesentlichen als runde flache Scheibe mit einem Einschnitt (11) ausgebildet ist, und die seitlichen Bereiche neben dem Einschnitt (11) jeweils Verjüngungen (25) aufweisen.

7. Zugfeder nach Anspruch 1, **dadurch gekennzeichnet, dass** der Adapter (17) im Wesentlichen als rundes Bauelement ausgeführt ist und einen Führungsbereich (29) aufweist, der in das Federende (3) des Innenraumes der Zugfeder (1, 15) eindringt und gleichzeitig einen Adaptionsbereich (10) außerhalb des Federendes (3) aufweist und innerhalb der Zugfeder (1, 15) über zwei benachbarte Windungen, unter Einfügung eines Verbindungsstückes (23, 24) mit den Zugfedern (1, 15) verbunden wird.

8. Zugfeder nach Anspruch 7, **dadurch gekennzeichnet, dass** der Adaptionsbereich (10) einen Schaft (22) mit einer Befestigungsbohrung (18) und vorzugsweise seitlichen Schlüsselflächen (19) aufweist.

9. Zugfeder nach Anspruch 7 oder 8, **dadurch gekennzeichnet, dass** der Führungsbereich (29) mindestens einen Einschnitt (21) und/oder einen Kragen (20) zur Verbindung mit den Verbindungsstücken (23, 24) aufweist, wobei der Kragen (20) sich gegen das Federende (3) der Zugfeder (1) abstützt.

10. Zugfeder nach einem der vorhergehenden Ansprüche, **dadurch gekennzeichnet, dass** die Zugfeder (1) innerhalb der Zugfeder (15) platziert ist, wobei beide Zugfedern (1, 15) gleichzeitig an mindestens einem Federende (3) mit dem Adapter (2, 17) gekoppelt werden.

11. Zugfeder nach Anspruch 1, **dadurch gekennzeichnet, dass** der Adapter (26) einen Führungsschaft aufweist, der innerhalb mindestens eines Federendes (3) eintaucht, und vorzugsweise einen außerhalb des Federendes (3) exzentrisch angeordneten Arretierungsbolzen (28) aufweist, der mit einem verschwenkbaren Verbindungssstück (27) zusammenwirkt, welches im verschwenkten Zustand zwischen zwei benachbarten Windungen der Zugfeder (1) eingreift.

12. Zugfeder nach Anspruch 11, **dadurch gekennzeichnet, dass** an jedem Federende (3) ein Adapter (2, 17, 26) vorhanden ist.

13. Zugfeder nach einem oder mehreren der vorhergehenden Ansprüchen, **dadurch gekennzeichnet, dass** an jedem Federende (3) unterschiedliche Adapter (2, 17, 26) vorhanden sind.

14. Zugfeder nach einem oder mehreren der vorhergehenden Ansprüche, **dadurch gekennzeichnet, dass** die Sicherung des Adapters (2, 17, 26) durch ein das jeweilige Federende (3) überkronende Abschlussstück (5) ausgeführt wird.

15. Zugfeder nach Anspruch 5 und 14, **dadurch gekennzeichnet, dass** das Abschlussstück (5) als Kappe oder dergleichen ausgebildet ist und aus Stahl oder Kunststoff oder dergleichen besteht.
